# EUROPÄISCHE PATENTSCHRIFT

(11) **EP 2 581 270 B1**
(45) Veröffentlichungstag und Bekanntmachung des Hinweises auf die Patenterteilung: **27.05.2015**
(21) Anmeldenummer: 12186130.6
(22) Anmeldetag: 26.09.2012
(51) Int. Cl.: B60R 7/06, B60R 11/02

(54) **Einsatz für ein Armaturenbrett**
Insert for a dashboard
Insert pour un tableau de bord

(30) Priorität: 14.10.2011 DE 102011084500
(43) Veröffentlichungstag der Anmeldung: 17.04.2013
(73) Patentinhaber: Ford Global Technologies, LLC, Dearborn, MI 48126 (US)
(72) Erfinder: Stephan, Jörg, 50259 Pulheim (DE)
(74) Vertreter: Dörfler, Thomas

(56) Entgegenhaltungen:
- EP-A1- 2 070 768
- EP-B1- 2 086 794
- WO-A1-2009/043367
- WO-A2-2009/127439
- DE-A1-102006 008 420
- FR-A1- 2 932 442
- US-B1- 7 623 958

## Beschreibung

Die Erfindung betrifft einen Einsatz für ein Armaturenbrett eines Kraftfahrzeugs zur Einbringung einer Docking-Vorrichtung für mobile elektronische Geräte, wobei der Einsatz einen Gerätehalter in Form einer Abdeckung ausbildet, die zwischen einer den Einsatz zumindest teilweise abdeckenden Nicht-Gebrauchsstellung und einer Gebrauchsstellung, in der die Abdeckung aus dem Einsatz heraus geschwenkt ist und die Rückseite der Abdeckung den eigentlichen Gerätehalter ausbildet, verschwenkbar ist.

In modernen Kraftfahrzeugen werden die sogenannten Smartphones usw. immer häufiger als Ersatz für die Musikanlage und auch zur Navigation neben der offensichtlichen Telefonfunktion verwendet.

Dazu werden entsprechende Halterungen im Bereich des Armaturenbretts benötigt, die sowohl eine reine mechanische Halterung bereitstellen als auch eine elektronische Schnittstelle und ggf. eine Stromversorgung bereitstellen. Die Halterungen müssen die mobilen Geräte sicher fixieren, sollen aber bei nicht Gebrauch möglichst unauffällig sein, also hinter Klappen verschwinden. Daneben müssen die Halterungen aber gerade für den Navigationseinsatz zentral und gut sichtbar angeordnet sein.

Allerdings ist es relativ aufwendig, solche Docking-Vorrichtungen im Bereich des Armaturenbretts vorzusehen, da diese dazu entsprechende Aussparungen für die jeweiligen Einsätze aufweisen müssen, was die Herstellungskomplexität der Armaturenbretter enorm erhöht und diese somit verteuert.

Aus der WO 2009/043367 A1 ist eine Docking-Vorrichtung für ein tragbares Gerät bekannt, bei dem das Docking-Gerät mindestens eine Basis und ein mit der Basis verbundenes Halteteil aufweist. Ein Montageteil ist innerhalb der Basis schwenkbar befestigt und umfasst eine Abdeckung, die in einer ersten Stellung im Wesentlichen an der Basis fluchtet und die in eine zweite Stellung schwenkbar ist, in der ein Teil der Abdeckung sich im Wesentlichen aufwärts von der Docking-Vorrichtung erstreckt, wobei die Unterseite der Abdeckung in der zweiten aufgeschwenkten Stellung eine Halterung und Anschlussmittel für ein tragbares Gerät bereitstellt

Aus der DE 198 17 345 B4 ist eine Fahrzeugkonsole mit einer aus einem nach oben offenen Aufnahmeschacht verschwenkbaren Halterung für ein Autotelefon bekannt, mit der das Autotelefon aus einer liegenden Aufbewahrungsposition in eine aufgerichtete Bedienposition verschwenkbar ist, wobei sich der Aufnahmeschacht und das nach oben aus dem Aufnahmeschacht in die Bedienposition verschwenkte Autotelefon in dem beim Fahren mäßgeblichen Sichtfeld und/oder in der Sprechrichtung des Fahrers befinden.

Aus der DE 10 2006 008 420 A1 ist ein Gerätehalter zum Einbau in ein Kraftfahrzeug für ein elektronisches Gerät, etwa ein Unterhaltungs-, Kommunikations-, Datenverarbeitungs-, Informationsgerät oder dergleichen bekannt, wobei der Gerätehalter Teil eines eine oberseitige Öffnung aufweisenden Faches ist, wobei der Gerätehalter gegenüber dem Fach zwischen einer Nicht-Gebrauchsstellung, in der der Gerätehalter in dem Fach aufgenommen ist, und einer Gebrauchsstellung, in der der Gerätehalter aus dem Fach heraus geschwenkt ist, verschwenkbar ist und dem Fach ein Verschluss zum Verschließen seiner Öffnung zugeordnet ist, wobei der Verschluss neben einer die Öffnung vollständig verschließenden Verschlussstellung in eine weitere Verschlussstellung bringbar ist, in der bei aus dem Fach ausgeschwenktem Gerätehalter die verbleibende Restöffnung zumindest weitestgehend verschlossen ist.

Aus der EP 2 086 794 B1 ist ein Halter für ein nomadisches elektronisches Gerät bekannt, wobei der Halter dazu bestimmt ist, einen Teil eines Armaturenbretts eines Kraftfahrzeugs zu bilden, mit einer Grundplatte und mit einem Aufnahmesockel für das Gerät, der mindestens einen Aufnahmesitz des Geräts begrenzt, wobei die Grundplatte eine allgemein zylindrische Schürze, die mit einem Ende versehen ist, das eine ringförmige Randleiste bildet, die beim Einbau gegen die Außenseite des Armaturenbretts in Auflage kommt, und eine offene Abdeckung enthält, wobei der Sockel bezüglich der offenen Abdeckung zwischen einer ersten Schließstellung des Halters und mindestens einer zweiten Winkelstellung winkelmäßig verschiebbar montiert ist, die den Sitz zugänglich macht.

Aus der FR 2 932 442 A1, die den Oberbegriff des Anspruchs 1 offenbart, ist ein Gerätehalter an einem Armaturenbrett bekannt, wobei der Gerätehalter in einer Versenkung angeordnet ist und aus dieser aufstellbar ist. Der Gerätehalterweist in der Breite zueinander verstellbare Haltevorsprünge auf.

Demgegenüber besteht die Aufgabe der vorliegenden Erfindung einen Docking-Vorrichtungs-Einsatz für ein Armaturenbrett bereitzustellen, mit dem auf einfache Weise sowohl eine Docking-Vorrichtung für mobile Geräte ohne Erhöhung der Herstellungskomplexität der Armaturenbretter somit Verteuerung möglich ist.

Diese Aufgabe wird durch den in Anspruch 1 wiedergegebene Einsatz gelöst.

Dadurch, dass der Einsatz auch einen vertieften Stauraum mit einer separaten Abdeckung umfasst, wobei der Stauraum den Bereich der Docking-Vorrichtung zumindest teilweise umgibt wobei die Abdeckungen separat bedienbar und verschwenkbar sind, ist es möglich, auch eine Staumöglichkeit bereitzustellen, ohne dass mehrere separate Einsätze nötig sind. Dies vereinfacht den Aufbau und die Herstellung des Armaturenbretts und auch des Einsatzes und dessen Befestigung sowie Einbau im Armaturenbrett. Zudem wird Montage erleichtert, da nur noch ein Einsatz mit doppelter Funktion eingesetzt und angeschlossen werden muss. Da separate Abdeckungen vorgesehen sind, können die Docking-Vorrichtung und der Stauraum trotzdem wahlweise verwendet werden.

Besonders sinnvoll ist es, wenn der Stauraum den Bereich der Docking-Vorrichtung auf drei Seiten umgibt. Somit können der Stauraum-Bereich und der Bereich der Docking-Vorrichtung des Einsatzes eine gemeinsame Außenkante des Einsatzes ausbilden. Dies erlaubt eine optisch ansprechende Ausgestaltung und Anordnung.

Eine besonders bevorzugte Variante sieht vor, dass der Gerätehalter gegenüber der Abdeckung zur Einnahme einer Hoch- oder Querausrichtung des mobilen Geräts verdrehbar ausgestalte Haltemittel aufweist. Somit kann das mobile Gerät ohne Umstecken etc. je nach Bedarf in der benötigten Lage verwendet werden. Sogar ein Wechsel innerhalb der Funktion von Hoch- nach Querkantlage ist denkbar und mittels der Erfindung sicher ausführbar. Dabei kann die Schnittstelle bzw. der elektrische Anschluss des mobilen Geräts an das Fahrzeug mittels Kabel oder direkter Steckverbindung ausgeführt sein. Diese können wahlweise fix oder ebenfalls mit-drehend ausgebildet sein.

Bevorzugt ist es, wenn die Haltemittel zueinander verstellbare Haltefinger umfassen, so dass Geräte unterschiedlicher Größe gehalten werden können.

Weitere Einzelheiten, Merkmale und Vorteile der Erfindung ergeben sich aus der nachfolgenden Beschreibung eines Ausführungsbeispiels anhand der Zeichnung, in der
Fig. 1 eine schematische perspektivische Ansicht eines Armaturenbretts mit einem Einsatz zur Bereitstellung einer Docking-Vorrichtung für mobile Geräte und gleichzeitig eines Staufachs im zentralen Bereich im geschlossen Zustand zeigt;
Fig. 2 eine schematische perspektivische Ansicht des Armaturenbretts aus Figur 1 mit aufgeklapptem Gerätehalter zeigt;
Fig. 3 eine schematische perspektivische Ansicht des Armaturenbretts aus Figur 1 mit aufgeklapptem Gerätehalter und eingesetztem mobilen Gerät zeigt;
Fig. 4 eine schematische perspektivische Ansicht des Armaturenbretts aus Figur 1 mit aufgeklapptem Gerätehalter und eingesetztem mobilen Gerät sowie geöffnetem Stauraum zeigt und
Fig. 5 eine schematische perspektivische Ansicht des Gerätehalters aus Figur 2 in einer gedrehten Stellung der Haltemittel zeigt.

In den Figuren ist ein als Ganzes mit 1 bezeichnetes Armaturenbrett eines PKW gezeigt.

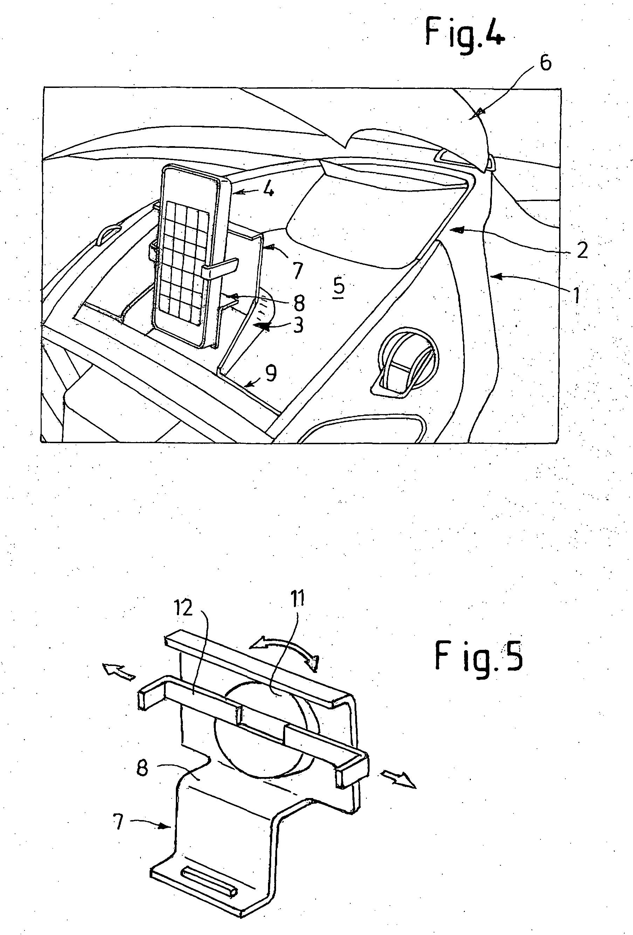

In das Armaturenbrett 1 ist ein Einsatz 2 eingesetzt, der zur Einbringung einer Docking-Vorrichtung 3 für mobile elektronische Geräte 4 und auch einen vertieften Stauraum 5 mit einer separaten Abdeckung 6 (vgl. Figur 4) umfasst.

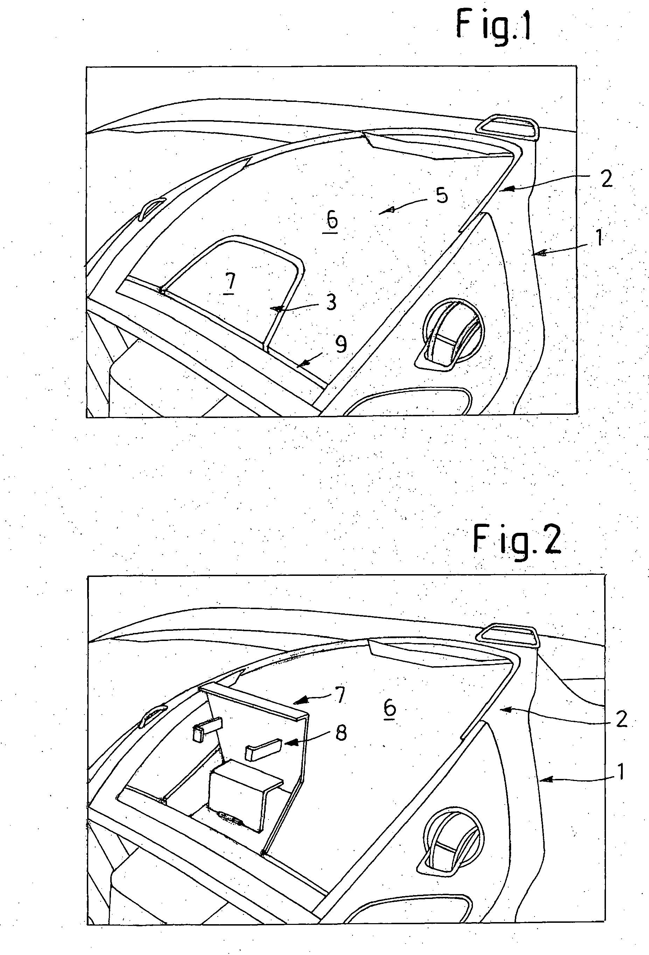

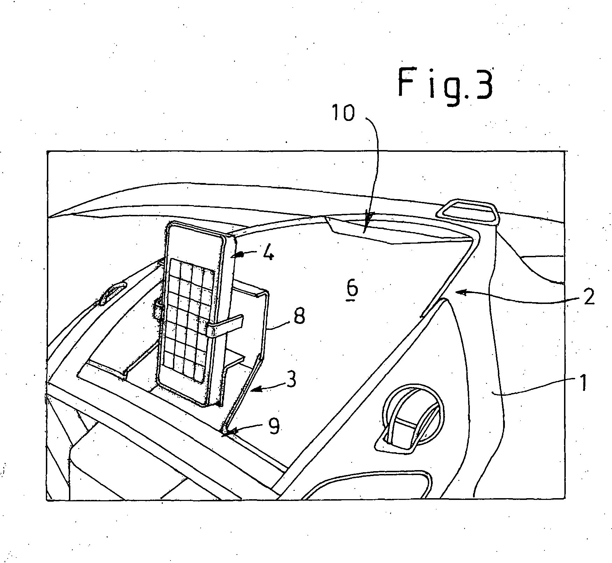

Der Einsatz 2 umfasst einen Gerätehalter in Form einer Abdeckung 7, die zwischen den Einsatz zumindest teilweise abdeckenden einer Nicht-Gebrauchsstellung (vgl. Figur 1) und einer Gebrauchsstellung (vgl. Figur 2 und 3), in der die Abdeckung 7 aus dem Einsatz 2 heraus geschwenkt ist und die Rückseite 8 der Abdeckung 7 den eigentlichen Gerätehalter ausbildet, verschwenkbar ist.

Dabei umgibt der Stauraum 5 den Bereich der Docking-Vorrichtung 3 auf drei Seiten und der Stauraum-Bereich 5 und der Bereich der Docking-Vorrichtung 3 des Einsatzes 2 bilden eine gemeinsame vordere Außenkante 9 des Einsatzes aus.

Die Docking-Vorrichtung 3 und der Stauraum 5, trotz gemeinsamer Montage und Einstückigkeit des Einsatzes 2, sind unabhängig voneinander verwendbar, da die jeweiligen Abdeckungen 7 bzw. 6 separat bedienbar und verschwenkbar sind.

Des Weiteren ist eine zusätzliche Ablage 10 im hinteren Bereich des Einsatzes 2 angeordnet.

Der Gerätehalter weist gegenüber der Abdeckung 7 zur Einnahme einer Hoch- oder Querausrichtung des mobilen Geräts verdrehbar ausgestalte Haltemittel 11 auf (vgl. Figur 5). Die Haltemittel 11 umfassen zueinander verstellbare Haltefinger 12, die das mobile Gerät 4 klammernd umgreifen. Somit kann das mobile Gerät 4 wahlweise hoch oder quer ausgerichtet werden, je nachdem welche Ausrichtung des Bildschirms benötigt wird.

## Patentansprüche

1. Einsatz (2) für ein Armaturenbrett (1) eines Kraftfahrzeugs zur Einbringung einer Docking-Vorrichtung (3) für mobile elektronische Geräte, wobei der Einsatz einen Gerätehalter in Form einer Abdeckung (7) ausbildet, die einer zwischen den Einsatz zumindest teilweise abdeckenden Nicht-Gebrauchsstellung, und einer Gebrauchsstellung, in der die Abdeckung (7) aus dem Einsatz (2) heraus geschwenkt ist und die Rückseite (8) der Abdeckung (7) den eigentlichen Gerätehalter ausbildet, verschwenkbar ist,
**dadurch gekennzeichnet, dass**
der Einsatz auch einen vertieften Stauraum (5) mit einer separaten Abdeckung (6) umfasst, wobei der Stauraum (5) den Bereich der Docking-Vorrichtung (3) zumindest teilweise umgibt, wobei die Abdeckungen (6,7) separat bedienbar und verschwenkbar sind.

2. Einsatz nach Anspruch 1,
**dadurch gekennzeichnet, dass**
der Stauraum (5) den Bereich der Docking-Vorrichtung (3) auf drei Seiten umgibt.

3. Einsatz nach Anspruch 1 oder 2,
**dadurch gekennzeichnet, dass**
der Stauraum-Bereich (5) und der Bereich der Docking-Vorrichtung (3) des Einsatzes eine gemeinsame Außenkante (9) des Einsatzes ausbilden.

4. Einsatz nach einem der vorhergehenden Ansprüche,
**dadurch gekennzeichnet, dass**
der Gerätehalter gegenüber der Abdeckung zur Einnahme einer Hoch- oder Querausrichtung des mobilen Geräts verdrehbar ausgestalte Haltemittel (11) aufweist.

5. Einsatz nach einem der vorhergehenden Ansprüche,
**dadurch gekennzeichnet, dass**
die Haltemittel (11) zueinander verstellbare Haltefinger (12) umfassen.

## Claims

1. Insert (2) for a dashboard (1) of a motor vehicle for the introduction of a docking apparatus (3) for mobile electronic devices, the insert forming a device holder in the form of a cover (7) which is pivotable between an out-of-service position which at least partially covers the insert and an in-service position, in which the cover (7) is pivoted out of the insert (2) and the reverse side (8) of the cover (7) forms the actual device holder,
**characterized in that**
the insert also comprises a recessed storage space (5) with a separate cover (6), the storage space (5) at least partially surrounding the area of the docking apparatus (3), the covers (6, 7) being operable and pivotable separately.

2. Insert according to Claim 1,
**characterized in that**
the storage space (5) surrounds the area of the docking apparatus (3) on three sides.

3. Insert according to Claim 1 or 2,
**characterized in that**
the storage space area (5) and the docking apparatus area (3) of the insert form a common outer edge (9) of the insert.

4. Insert according to one of the preceding claims,
**characterized in that**
the device holder comprises holding means (11) constructed in a rotatable manner relative to the cover for accommodating the mobile device in an upright or transverse orientation.

5. Insert according to one of the preceding claims,
**characterized in that**
the holding means (11) comprise retaining fingers (12) adjustable towards one another.

## Revendications

1. Insert (2) pour un tableau de bord (1) d'un véhicule automobile pour le montage d'un dispositif d'arrimage (3) pour des appareils électroniques mobiles, l'insert constituant un support d'appareil sous la forme d'un recouvrement (7) qui peut pivoter d'une position de non utilisation recouvrant au moins en partie l'insert dans une position d'utilisation dans laquelle le recouvrement (7) est pivoté hors de l'insert (2) et le côté arrière (8) du recouvrement (7) constitue le support d'appareil proprement dit,
**caractérisé en ce que**
l'insert comprend également un espace de rangement renfoncé (5) avec un recouvrement séparé (6), l'espace de rangement (5) entourant au moins en partie la région du dispositif d'arrimage (3), les recouvrements (6, 7) pouvant être utilisés et pivotés séparément.

2. Insert selon la revendication 1,
**caractérisé en ce que**
l'espace de rangement (5) entoure la région du dispositif d'arrimage (3) sur trois côtés.

3. Insert selon la revendication 1 ou 2,
**caractérisé en ce que**
la région de l'espace de rangement (5) et la région du dispositif d'arrimage (3) de l'insert constituent une arête extérieure commune (9) de l'insert.

4. Insert selon l'une quelconque des revendications précédentes,
**caractérisé en ce que**
le support d'appareil présente des moyens de retenue (11) réalisés de manière à pouvoir tourner par rapport au recouvrement, pour adopter une orientation relevée ou transversale de l'appareil mobile.

5. Insert selon l'une quelconque des revendications précédentes,
**caractérisé en ce que**
les moyens de retenue (11) comprennent des doigts de retenue (12) pouvant être déplacés les uns par rapport aux autres.
